# EUROPEAN PATENT APPLICATION

(11) **EP 1 855 345 A1**
(43) Date of publication of application: **14.11.2007**
(21) Application number: 06721994.9
(22) Date of filing: 03.03.2006
(51) Int. Cl.: H01M 10/38, H01M 2/04

(54) **HIGH CAPACITY LITHIUM ION SECONDARY BATTERY WITH METAL CASE**

(30) Priority: 04.03.2005 CN 200510011386
(71) Applicant: Citic Guoan Mengguli New Energy Technology Co., Ltd., Changping District Beijing 102200 (CN)
(72) Inventor: QI, Lu, Beijing 102200 (CN); LI, Jianhua, Beijing 102200 (CN); AN, Ping, Beijing 102200 (CN); ZHU, Xiufeng, Beijing 102200 (CN)
(74) Representative: Zinnecker, Armin
(86) International application number: PCT/CN2006/000320
(87) International publication number: WO 2006/092104

(57) **Abstract**

The present invention relates to a high capacity lithium ion secondary battery with metal casing, **characterized in that** each of the positive terminal or negative terminal includes respectively an upper backing plate, an upper insulator and a lower insulator. The upper backing plate and upper insulator are long-circular piece, two or more rivets pass through the concentric holes on the upper arm of a positive or negative electrode tab, the lower insulator, a sealing cover, the upper insulator and the upper backing plate respectively and rivet them as a whole. The lower arm of the positive electrode tab or negative electrode tab is connected to the corresponding positive or negative electrode tab on a battery core body, and the battery core body is comprised of two or more winded cores in parallel connection. The battery is provided with the advantages and effects of good sealing performance, good electrochemistry property, and simple manufacturing process, as well as high security of a pile comprised of plurality of such individual batteries. As a result the useless space in height of battery is reduced and the volumetric specific energy of the same is enhanced.

## Description

### Technical field

The present invention relates to a high capacity lithium ion secondary battery with metal casing and belongs to the energy field.

### Technical background

Lithium ion batteries with the advantages of high capacity and high specific energy density have been developed and applied rapidly in recent years as well as have substituted gradually the nickel-cadmium battery and nickel metal hydride battery in many application fields. At present, the lithium ion batteries have been found their applications wide in electric bicycles, electric motors and electric vehicles. There has been a high capacity lithium ion secondary battery with metal casing, both of its positive terminal and negative terminal use the bolting connection. There are also some of batteries, in which one of the terminals is connected by means of riveting, and the other is formed of a battery casing. However, this kind of battery with high-voltage uses the non-aqueous electrolytes and is usually used in groups, so they are prone to occurring safety problems such as explosion and fire by imprudence. One of the reasons is that the positive and negative terminals adopt bolting connection. Since the batteries are used in vehicles or moving devices, the bolts of batteries are easy to loose due to great vibrating forces. As a result, there can be electrolyte leakage and short circuit of battery, which would lead to an accident. Meanwhile, the battery assembling is complicated in batch production, and it is difficult to obtain a reliable sealing. Therefore, a pile, which is formed of plurality of individual battery units having a metal casing as a positive electrode or a negative electrode, exists high danger of short-circuit when in use.

### Summary of the invention

Therefore the object of the present invention is to provide a high capacity lithium ion secondary battery with metal casing, in which the electrode terminals are fixed by riveting to avoid the disadvantages of the prior art. Thereby, the sealing reliability of battery is increased, the security and electrochemistry properties, particularly, the electrochemical performance at high rate during charging-discharging, of the lithium ion secondary batteries are improved, and the manufacturing process is also simplified as well.

This object of the present invention is achieved in accordance with the following technical solution:
A high capacity lithium ion secondary battery with metal casing, including: a casing (3), a sealing cover (1), a battery core body (2), an anti-explosion hole (6), an injection hole (7), a positive terminal (4) and a negative terminal (5), characterized in that the positive and negative terminals are provided on the two ends of the sealing cover, the anti-explosion hole is located between the positive and negative terminals, the injection hole is disposed at a corner of one end of the sealing cover; the positive terminal or negative terminal is comprised of an upper backing plate (8), an upper insulators (9) located on one end of the sealing cover, as well as a lower insulator plate (10) and a positive electrode tab (11) or a negative electrode tab (14) located under said end of the sealing cover; the upper backing plate and upper insulator are long-circular pieces, said upper insulator is provided with a long-circular recess for receiving the long-circular upper backing plate; two or more holes are provided in said recess, and a tubular boss is formed on the bottom of each of the holes, the outer diameter of the tubular boss fits tightly with a concentric hole in the sealing cover, and the inner diameter of the tubular boss fits tightly with a rivet column; the height of said boss is same as the thickness of the sealing cover; said lower insulator plate is a rectangle piece; two or more rivets (12) pass through concentric holes on the upper arm of the positive electrode tab or negative electrode tab, the lower insulator plate, the sealing cover, the upper insulator and the upper backing plate respectively and therefore rivet them as a whole; the positive electrode tab or negative electrode tab is connected at the bottom to the corresponding positive electrode tab or negative electrode tab on the battery core body.

Said battery core body is comprised of two or more cores in parallel connection, each of which is prepared by winding a positive plate, a separator and a negative plate. Said rivet is a solid rivet, and the material of rivets for the positive terminal is aluminum or aluminum alloy, and the material of rivets for the negative terminal is aluminum, copper or their alloy.

According to the present invention, the capacity of said high capacity lithium ion secondary battery with metal casing is usually more than 5 ampere-hours, and the metal casing is formed by stretching or punching a stainless steel, aluminum alloy, or nickel coated ferro material. The material of sealing cover is same as the one of the casing. Said sealing cover is made by punching with the aid of the metal mold. On the corners of the sealing cover, snicks of "+" and" - " are provided to indicate the positive and negative electrodes of the battery. The injection hole is used for filling the electrolyte and can be sealed by pressing in a small steel ball or a plastic metal block therein while the anti-explosion hole constitutes the battery safety means. The injection hole located on a corner of one end of the sealing cover is usually sealed by means of braze welding with metal foil or a high strength adhesive. The battery core body is comprised of two or more cores in parallel connection, each of which was prepared by winding a positive plate, a separator and a negative plate. The material of positive electrode is lithium cobaltoxide, lithium nickel oxide, lithium manganate or lithium phosphate whereas the material of negative electrode is carbon materials or other compound intercalated lithium. The upper insulator, the lower insulating plate are made of the high insulating polymers by means of injection molding, and said high insulating polymers usually are polypropylene or fluorine-containing resins.

Comparing to the prior art, the technical solution according to the present invention has the following advantages and effects:
(a) The battery casing is insulated from the positive and negative terminals, thus the safety of batteries is improved;
(b) The sealing performance and the electrochemistry property of battery are improved meanwhile the manufacturing process is simplified;
(c) The riveting by using two or more rivets will reduce the internal resistance of battery effectively, improve the large current output capability of the same and reduce its useless space in height as well as enhance the volumetric specific energy.
(d) The battery core body is comprised of two or more winded cores in parallel connection, which also reduces the internal resistance of battery effectively and is easy to be made. As a result, the manufacturing process is simple.

### Description of the drawing

Figure.1 is a schematic of a lithium ion secondary battery according to present invention;
Figure.2 is a schematic of the positive and negative terminals of the battery before and after assembling.

### Best modes for carrying out this invention

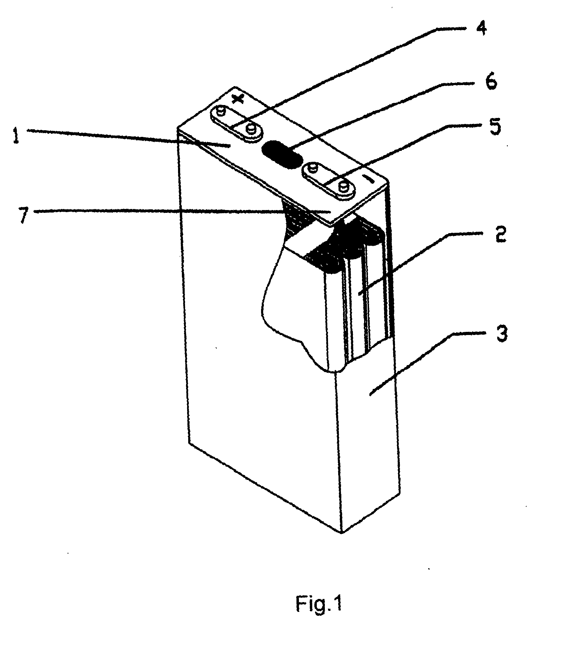

As shown in Figure 1, a high capacity lithium ion secondary battery with metal casing includes: a casing (3), a sealing cover (1), a battery core body (2), an anti-explosion hole (6), an injection hole (7), a positive terminal (4) and a negative terminal (5). The positive and negative terminals are provided on the two ends of the sealing cover, the anti-explosion hole is located between the positive and negative terminals, and the injection hole is disposed at a corner of one end of the sealing cover. The positive terminal or negative terminal is comprised of an upper backing plate (8), an upper insulators (9) located on one end of the sealing cover, as well as a lower insulator plate (10) and a positive electrode tab (11) or a negative electrode tab (14) located under the said end of the sealing cover. The upper backing plate and upper insulator are long-circular pieces, and the upper insulator is provided with a long-circular recess for receiving the long-circular upper backing plate. Two or more holes are provided in said recess, and a tubular boss is formed on the bottom of each of the holes, the outer diameter of the tubular boss fits tightly with a concentric hole in the sealing cover, and the inner diameter of the tubular boss fits tightly with a rivet column. The height of the boss is same as the thickness of the sealing cover. The rivet can be insulated from the sealing cover by means of the tubular boss, which will improve the safety of battery. The lower insulator plate is a rectangle piece; two or more rivets (12) pass through concentric holes on the upper arm of the positive tab or negative electrode tab, the lower insulator plate, the sealing cover, the upper insulator and the upper backing plate respectively and therefore rivet them as a whole. The positive electrode tab or negative electrode tab is connected at the bottom to the corresponding positive or negative electrode tab on the battery core body.

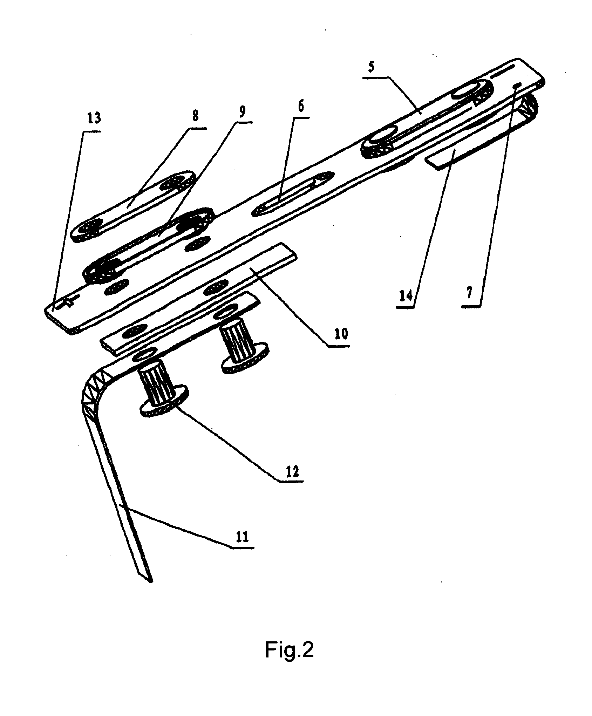

As shown in Fig.2, the left side of the figure is a pre-assembling state, and the right side of the figure is an assembling state. The type of rivet is a solid one, the material of rivets for the positive terminal is aluminum or aluminum alloy, the material of rivets for the negative terminal is aluminum, copper or their alloy. The connection of electrodes can not only insulate the battery casing from the positive and negative terminals, but also reduce the useless space in height of battery and increase the volumetric specific energy of the same as well as avoid the incidents of the electrolyte leakage and short circuit because of bolts loosing.

The upper insulator is made by injection molding. Two or more holes are punched at the each end of the sealing cover. It is provided that the diameter of hole should fits tightly with the tubular boss on the upper insulator, which can insulate the positive and negative electrodes from the casing after assembling. The anti-explosion hole is punched out on the middle of the sealing cover and the injection hole is punched out on a corner of one end of sealing cover. Further, the upper backing plate, the lower insulator and the upper arms of the positive and negative electrode tabs are also punched out two or more holes respectively. The distance between the holes in these parts are the same as the one between the holes in the sealing cover and the diameter of such a hole fits tightly against the diameter of the rivet column. When assembling, two or more rivets pass through the concentric holes on the upper arm of the positive electrode tab or negative electrode tab, the lower insulator, the sealing cover, the upper insulator and the upper backing plate respectively and therefore rivet them as a whole. Then the battery core body is disposed in the casing, and the lower arm of the positive or negative electrode tab on the sealing cover is connected with the corresponding positive electrode tab or negative electrode tab of battery core body by means of the resistance welding or ultrasonic welding. After that the sealing cover and casing are connected as a whole by the laser welding or edge folding sealing.

The present invention is also applicable to a nickel-cadmium battery or nickel metal hydride power battery, and can obtain the same effects.

## Claims

1. A high capacity lithium ion secondary battery with metal casing, including: a casing (3), a sealing cover (1), a battery core body (2), an anti-explosion hole (6), an injection hole (7), a positive terminal (4) and a negative terminal (5), **characterized in that** said positive and negative terminals are provided on the two ends of the sealing cover, said anti-explosion hole is located between the positive terminal and negative terminal, said injection hole is disposed at a corner of one end of the sealing cover; said positive terminal or negative terminal is comprised of an upper backing plate (8), an upper insulators (9) located on one end of the sealing cover, as well as a lower insulator plate (10) and a positive electrode tab (11) or a negative electrode tab (14) located under said end of the sealing cover; said upper backing plate and upper insulator are long-circular pieces, said upper insulator is provided with a long-circular recess for receiving the long-circular upper backing plate; two or more holes are provided in said recess, and a tubular boss is formed on the bottom of each of the holes, the outer diameter of said tubular boss fits tightly with a concentric hole in the sealing cover, and the inner diameter of said tubular boss fits tightly with a rivet column; the height of said boss is same as the thickness of the sealing cover; said lower insulator plate is a rectangle piece; two or more rivets (12) pass through concentric holes on the upper arm of the positive electrode tab or negative electrode tab, the lower insulator plate, the sealing cover, the upper insulator and the upper backing plate respectively and therefore rivet them as a whole; said positive electrode tab or negative electrode tab is connected at the bottom to the corresponding positive electrode tab or negative electrode tab on the battery core body.

2. The lithium ion secondary battery as claimed in Claim 1, **characterized in that** said battery core body is comprised of two or more cores in parallel connection, each of which is prepared by winding a positive plate, a separator and a negative plate.

3. The lithium ion secondary battery as claimed in Claim 1, **characterized in that** said rivet is a solid rivet, the material of rivets for the positive terminal is aluminum or aluminum alloy, and the material of rivets for the negative terminal is aluminum, copper or their alloy.
